(19) Europäisches Patentamt

European Patent Office

Office européen des brevets

(11) **EP 1 251 140 A1**

(12) **EUROPEAN PATENT APPLICATION**

(43) Date of publication:
**23.10.2002 Bulletin 2002/43**

(51) Int Cl.7: **C08B 31/18**, C08B 15/04

(21) Application number: **01201454.4**

(22) Date of filing: **20.04.2001**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **SCA Hygiene Products Zeist B.V.
3700 AJ Zeist (NL)**

(72) Inventors:
• **Besemer, Arie
  3958 CE Amerongen (NL)**

• **van Brussel-Verraest, Dorine Lisa
  2411 WG Amerongen (NL)**
• **Thiewes, Harm Jan
  3931 CC Woudenberg (NL)**

(74) Representative: **Jorritsma, Ruurd et al
Nederlandsch Octrooibureau
Scheveningseweg 82
P.O. Box 29720
2502 LS Den Haag (NL)**

(54) **Process for oxidising primary hydroxyls in carbohydrates**

(57) Carbohydrates having primary hydroxyl groups, such as starch and cellulose, can be selectively oxidised to carboxylic carbohydrates by oxidation with molecular oxygen, using a nitrogen oxide such as a nitrite salt, as a catalyst. The reaction is advantageously carried out in a dehydrating solvent such as concentrated phosphoric acid.

**EP 1 251 140 A1**

## Description

The invention relates to the selective oxidation of primary hydroxyl functions in carbohydrates, using nitrogen oxide species, to produce carbohydrate carboxylic acids (glycuronic acids).

Carboxylic carbohydrates such as 6-carboxy cellulose and 6-carboxy starch have important utility in tissue and hygiene applications. It has been known for a long time that 6-carboxy cellulose can be produced by oxidising cellulose with dinitrogen tetraoxide. EP-A-625992 discloses a process for oxidising starch and cellulose using pressurised nitrogen dioxide and dinitrogen tetraoxide in the presence of oxygen in a hydrocarbon solvent, to produce polycarboxylic acids useful as cobuilders. A comparable process for producing polycarboxylic acids is described in DE-A-19740112. A process of oxidising cellulose or amylose using an excess of sodium nitrite in phosphoric acid was described by T. J. Painter et al. (*Carbohydrate Res.* **55**, 95-103 (1977), ibid. **140**, 61-68 (1985)).

These prior art oxidations have the advantage of avoiding chorine-based oxidising agents, but their disadvantage is that they are associated with a considerable degree of depolymerisation.

An improved process involving treatment of the carbohydrate (starch, cellulose, cyclodextrin) with nitric acid or a nitrate salt and a catalytic amount of nitrite in phosphoric acid is known from Netherlands patent application 93.01172. However, this process produces a considerable amount of NOx byproduct.

It was found according to the invention that carbohydrates, especially polymeric carbohydrates having primary hydroxyl groups, can be effectively and selectively oxidised at the primary position using oxygen as the ultimate oxidising agent and using a nitrogen oxide species as an oxidation catalyst and using a dehydrating solvent. The process does not produce a large NOx burden and is accompanied with relatively little depolymerisation. The net reaction equation is the following:

$$R\text{-}CH_2OH + O_2 \rightarrow R\text{-}COOH + H_2O$$

The nitrogen oxide species used as a catalyst can be virtually any nitrogen-oxygen compound, such a NO, $NO_2$ and $N_2O_4$ (gases), $NO_2^-$, $NO_3^-$ and their protonated counterparts (in solution), and mixtures thereof, such as an $NO/NO_2$ mixture or a nitrite / nitrate or a nitrite / nitric acid mixture. The catalytic amount of nitrogen oxide can be between 0.02 and 0.5 molar equivalents with respect to the carbohydrate hydroxylic function to be oxidised, in particular between 0.05 and 0.25 equivalents. The oxygen may be pure oxygen or a gas mixture containing oxygen (e.g. air) or dissolved oxygen. Preferably, the oxygen is supplied as air or as oxygen-enriched air brought in contact with the oxidation reaction mixture using pressurised oxygen-containing gas.

The process of the invention can be carried out according to two variants. According to a first preferred embodiment, the carbohydrate is dissolved in a polar, dehydrating solvent such as concentrated phosphoric acid, concentrated sulphuric acid, or a mixture of phosphoric acid or phosphorus pentaoxide and a polar solvent such as tertiary amine oxides (e.g. N-methyl-morpholine N-oxide), carboxamides in the presence of lithium salts, and phosphoric amides. Concentrated, i.e. at least 50%, preferably at least 70% (w/w), aqueous phosphoric acid is the preferred dehydrating solvent. The carbohydrates can be dissolved to a concentration of e. g. 5 to 25 wt.%. The necessary amount of nitrogen oxide, e.g. alkali metal nitrite, is added and the reaction mixture is placed under oxygen or air or other oxygen-containing gas.

The amount of oxygen can be limited e.g. by using the oxygen from a closed vessel, which when provided with suitable measuring devices, also allows monitoring of the reaction progress. The gas-liquid interface area is kept high and mixing is applied so as to enhance the oxygen transfer to the liquid phase. Preferably one equivalent of oxygen is used per equivalent of hydroxylic function to be oxidised.

According to another embodiment, the carbohydrate is contacted, as such, or suspended in an amount of suitable solvent, with an oxygen-containing gas, also containing the nitrogen oxide, such as nitrogen monoxide (NO) and/or nitrogen dioxide ($NO_2$) in a slurry with a dehydrating agent. The solvent in this embodiment is an indifferent apolar solvent such as a chlorinated hydrocarbon or, preferably, a hydrocarbon such as a C5-C14 alkane or cycloalkane (e.g. cyclohexane). The amount of this solvent is typically as low as possible, in particular less than 1 weight part per weight part of carbohydrate. The dehydrating agent should be a dehydrating agent that does not react with NOx. It is preferably a solid and more preferably an insoluble solid. Suitable examples of dehydrating agents are phosphorus pentoxide or concentrated phosphoric and other acid anhydrides such as sulphur trioxide.

The reaction temperature in either embodiment is preferably between 0 and 50°C, most preferably between 10 and 40°C. A higher temperature leads to increased reaction kinetics, but to lower oxygen solubility and thus to limited net rate increase, whereas lower temperatures result in the reaction to proceed too slowly.

The process of the invention results almost exclusively in oxidation of the primary hydroxyl groups and to a minor extent, oxidation of secondary hydroxyls, i.e. ring hydroxyls, occurs, ultimately to 2-oxo or 3-oxo groups. For most applications, these keto functions, with a DS, degree of substitution, of less than 0.1, do not interfere. If desired, any keto or aldehyde functions may be removed by reduction, e.g. using sodium borohydride, or stabilised by treatment with an alcohol, e.g. isopropanol (hemiketal formation).

The carbohydrates to be oxidised can be mono- or oligosaccharides, sugar alcohols, glycosides, and in particular carbohydrates having primary alcohol functions, especially polysaccharides having chain lengths of at least 5 anhydroglycose units, such as $\alpha$-glucans (the starch family, pullulan, and cyclodextrins), $\beta$-glucans (cellulose), furanofructans, galactans, (galacto) mannans, and the like. Another group of compounds suitable for oxidation with the present process are hydroxyalkylated, especially hydroxyethylated carbohydrates such as hydroxyethyl starch or hydroxyethyl cellulose. These derivatives result in carboxy-carboxymethyl carbohydrates, i.e. carbohydrates oxidised at the 6-position (in case of hexopyranoses) and containing carboxymethyl substituents. Other suitable starting materials include dialdehyde or dicarboxy carbohydrates such as dialdehyde starch, resulting in tricarboxy carbohydrates, i.e. carboxyl groups at the 2-, 3- and 6-positions (in case of 1,4-linked hexopyranoses). Most preferred starting materials are cellulose and starch and fractions (amylose, amylopectin and hydrolysis products) and derivatives thereof.

The product of the process of the invention may be further processed, e.g. further derivatised or, especially crosslinked. Crosslinking can be performed using conventional crosslinking agents such as epichlorohydrin, diepoxides, divinyl sulphone, and the like or by acid-catalysed interesterification of the carboxyl groups with carbohydrate hydroxyls. Crosslinked products, such as crosslinked 6-carboxy cellulose and 6-carboxy starch, are highly suitable as a superabsorbent material.

The degree of oxidation can be adjusted according to the desired properties of the oxidised carbohydrates. Several uses of 6-carboxy carbohydrates require relatively high degrees of oxidation (DO), e.g. 50% or more, i.e. 50% or more of the available hydroxymethyl ($-CH_2OH$) groups being oxidised to a carboxyl groups. Most preferred are degrees of oxidation between 60 and 90 %.

It has furthermore been found that the oxidised carbohydrate can be separated from the solvent, especially phosphoric acid, and the phosphoric acid can be recycled by precipitating the product using an polar organic solvent such as an alkanol, alkanone, alkanenitrile, nitroalkane or a mixture thereof with water. Most preferred are ethanol, acetone and, especially acetonitrile. The amount of organic solvent to be used is preferably between 1 to 4 volume parts per volume part of phosphoric acid. The phosphoric acid can subsequently be separated from the solvent and be reused as a solvent in a following oxidation batch.

### Example 1

2.5 grams of potato starch on dry weight, 15.4 mmole anhydroglucose units, were dissolved in 50ml of 85% phosphoric acid at room temperature, and subsequently, 500 µl 65% nitric acid, 5.4 mmole, and 50 mg sodium nitrite, 0.7 mmole, were added and mixed (theoretical maximum degree of oxidation (DO) expected due to NOx species is about 36%). The reaction mixture was exposed to oxygen under stirring in a closed system. After 24 h the DO was determined to be 40%, and after 96 h the DO was further increased to 50%. The DO was determined using the Blumenkrantz method (*Anal. Biochem.* (1973) **54**, 484) after reduction with sodium borohydride.

### Example 2

10 grams of potato starch on dry weight, 61.7 mmole anhydroglucose units, were dissolved in 70 grams of 85% phosphoric acid, and this solution was stirred for 6 h at a temperature of ca. 4°C. Subsequently the solution was split up in two equal part of 40grams each.
**2a)** To the first 40 grams of starch dissolved in the phosphoric acid, 200 mg of sodium nitrite (2.9 mmole) was added (theoretical maximum degree of oxidation (DO) due to NOx species is about 2.4%), and this solution was placed in air without stirring at room temperature.
**2b).** To the second 40 grams of starch dissolved in the phosphoric acid, 200 mg of sodium nitrite, 2.9 mmole was added (theoretical maximum DO due to NOx species is about 2.4%), and mixed at room temperature. This mixture was stirred and exposed to oxygen, ca. 8 liters, in a closed system. After 24 h, DO of reaction 2a) was 8%, whereas DO of reaction 2b) was 23%. The DO was determined by polyelectrolyte titration.

### Example 3

Starch (5 g) was brought into 30 ml of 85 % phosphoric acid in a 2L flask. The solution was cooled in ice; then the flask was flushed with oxygen and 100 mg $NaNO_2$ (1.44 mmol) was added. The flask was tightly closed and the mixture was stirred for about 15 minutes until it was dissolved. The reaction was allowed to proceed for one day. The solution was poured out into 80 ml acetonitrile. A white precipitate was formed, which after one day was collected through filtration. The solid was washed a few times with acetonitrile, followed by washing with acetone. The product was dried in vacuum. The yield was 5.5 g. The degree of oxidation (as determined with the Blumenkrantz method on uronic acids) was 17 %. This means that ca. 5 mmol of uronic acid is introduced. The reaction of only nitrite can yield 0.36 mmol uronic acid.

### Claims

1. A process for oxidising carbohydrates having primary hydroxyl groups by reacting the carbohydrate with a nitrogen-oxygen compound, *characterised in that* the oxidation is carried out in the presence of molecular oxygen in the presence of a dehydrating agent, and the nitrogen-oxygen compound is used in an amount of less than 50% with respect to the amount of primary hydroxyl groups to be oxidised.

**2.** A process according to claim 1, wherein the dehydrating agent is a solvent.

**3.** A process according to claim 2, wherein the dehydrating solvent is concentrated phosphoric acid.

**4.** A process according to claim 3, wherein the concentrated phosphoric acid has a concentration of at least 75% (w/w).

**5.** A process according to any one of claims 1-4, wherein the nitrogen oxygen compound is nitric acid, nitrite, nitrate or a mixture thereof.

**6.** A process according to claim 1, wherein the oxidation is carried out in the absence of a solvent or in the presence of an apolar solvent, and in the presence of a dehydrating agent, using a gas mixture containing oxygen and one or more nitrogen oxides.

**7.** A process according to any one of claims 1-6, wherein the oxidation is carried out at a temperature between 0 and 50°C.

**8.** A process according to any one of claims 1-6, wherein the oxidation is carried out using between 0.7 and 1.4 equivalent of oxygen with respect to the amount of primary hydroxyl groups to be oxidised.

**9.** A process according to claim 8, wherein the substrate is a glucan, especially starch, cellulose or a fraction or derivative thereof, or cyclodextrin.

**10.** A process for separating a polysaccharide product from a mixture containing phosphoric acid, comprising adding to the mixture 1-4 volume parts of a polar organic solvent selected from alkanols, alkanones, alkanenitriles, nitroalkanes and mixtures thereof per volume part of phosphoric acid.

**11.** A process according to claim 10, wherein said polar organic solvent comprises acetonitrile.

**European Patent Office**

## EUROPEAN SEARCH REPORT

Application Number

EP 01 20 1454

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,Y | NL 9 301 172 A (TNO)<br>1 February 1995 (1995-02-01)<br>* page 3 * | 1-11 | C08B31/18<br>C08B15/04 |
| Y | US 3 377 339 A (KEIITI SISIDO ET AL.)<br>9 April 1968 (1968-04-09)<br>*the whole document* | 1-11 | |
| Y | GB 709 684 A (NAAMLOOZE VENNOOTSCHAP KUNSTZIJDESPINNERIJ NYMA)<br>2 June 1954 (1954-06-02)<br>* page 1, line 81 - line 90 * | 1-11 | |

TECHNICAL FIELDS
SEARCHED (Int.Cl.7)

C08B

The present search report has been drawn up for all claims

| Place of search | Date of completion of the search | Examiner |
|---|---|---|
| THE HAGUE | 11 September 2001 | Lensen, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

**ANNEX TO THE EUROPEAN SEARCH REPORT
ON EUROPEAN PATENT APPLICATION NO.**

EP 01 20 1454

This annex lists the patent family members relating to the patent documents cited in the above-mentioned European search report.
The members are as contained in the European Patent Office EDP file on
The European Patent Office is in no way liable for these particulars which are merely given for the purpose of information.

11-09-2001

| Patent document cited in search report | | Publication date | Patent family member(s) | Publication date |
|---|---|---|---|---|
| NL 9301172 | A | 01-02-1995 | NONE | |
| US 3377339 | A | 09-04-1968 | NONE | |
| GB 709684 | A | 02-06-1954 | NONE | |

For more details about this annex : see Official Journal of the European Patent Office, No. 12/82